# EUROPEAN PATENT APPLICATION

(11) **EP 4 722 756 A1**
(43) Date of publication of application: **08.04.2026**
(21) Application number: 25195616.5
(22) Date of filing: 13.08.2025
(51) Int. Cl.: G01S 7/481, G01S 17/931, G02B 1/111, B32B 27/00, G02B 1/118, H05B 3/86

(54) **OPTICAL DEVICE COVER AND OPTICAL MEMBER**

(30) Priority: 12.09.2024 JP 2024158050
(71) Applicant: Japan Aviation Electronics Industry, Limited, Tokyo 150-0043 (JP)
(72) Inventor: NINOKATA, Toshihiro, Shibuya-ku, Tokyo, 150-0043 (JP); TAKATA, Shingo, Shibuya-ku, Tokyo, 150-0043 (JP); IWASAKI, Akira, Shibuya-ku, Tokyo, 150-0043 (JP); AZUMA, Takeshi, Shibuya-ku, Tokyo, 150-0043 (JP)
(74) Representative: MERH-IP Matias Erny Reichl Hoffmann Patentanwälte PartG mbB

(57) **Abstract**

When a heating layer is provided on an inner coating of an optical device cover, the number of layers of the coating increases, and the transmittance decreases.

A cover according to the disclosed technology is an optical device cover that transmits light emitted by a light source to the outside, and includes a cover substrate, a metal fine wire placed on the light source side of the cover substrate, and an antireflection layer that embeds and covers the metal fine wire. In other words, the disclosed technology achieves a heating function and an antireflection function in a single layer, reducing the number of layers in the inner coating.

## Description

### TECHNICAL FIELD

The disclosed technology relates to a cover of an optical device such as LiDAR.

### BACKGROUND ART

LiDAR stands for light detection and ranging, and refers to a remote sensing (sensing using sensor from remote position) technology that uses near-infrared light, visible light, or ultraviolet light to irradiate an object and measure the distance by capturing the reflected light with a light sensor. Most commonly, near-infrared laser light is radiated in pulses, and the time difference until it bounces back from the object is measured to determine distance, position, and shape in three dimensions. For example, LiDAR is used in advanced automatic driving systems.

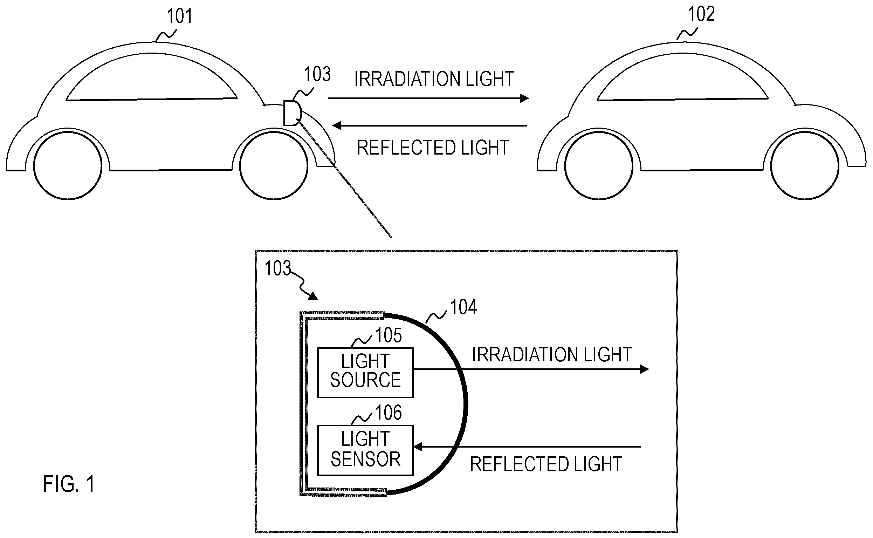

FIG. 1 schematically illustrates how the distance between vehicles is measured using LiDAR.

A LiDAR 103 is mounted on a vehicle 101. The LiDAR 103 includes a light source 105 and a light sensor 106. Irradiation light that passes through a cover 104 transparent to near-infrared light hits a vehicle 102, and the reflected light passes through the cover 104 again to be detected by the light sensor 106.

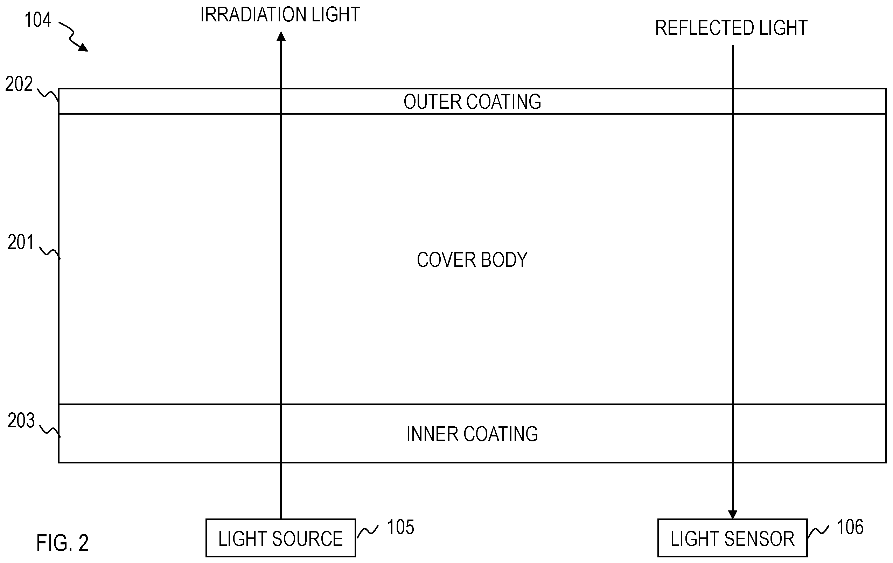

FIG. 2 is a partially enlarged view of the cover 104. The cover 104 has a cover body 201 coated with an outer coating 202 and an inner coating 203. The outer coating 202 serves to prevent dirt and to smoothly guide the reflected light to the light sensor. The inner coating 203 serves to smoothly guide the irradiation light to the outside.

Note that the thickness ratio is different from the actual one.

Incidentally, since LiDAR uses near-infrared laser, absorption and scattering of light due to moisture becomes a problem. In particular, if snow adheres to an outer surface of a front cover of LiDAR or if condensation occurs on an inner surface, snow or water droplets hinder transmission of the near-infrared laser of LiDAR. Therefore, it is necessary for the cover to have a function to eliminate snow accumulation and condensation on the optical window in low temperatures.

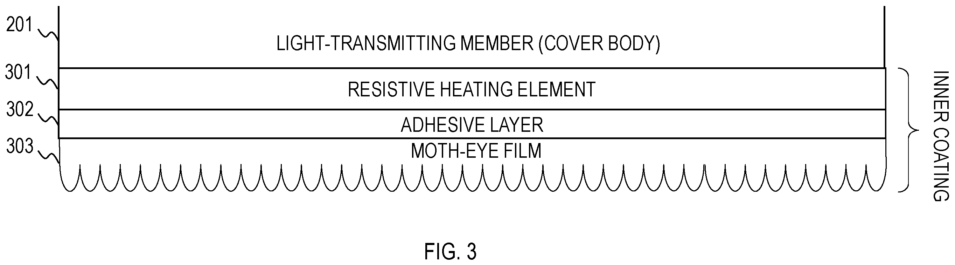

FIG. 3 is an optical device case according to a conventional technology aimed at melting snow and eliminating condensation (Patent Literature 1: International Publication No. WO 2018/180421). The optical device case will be described focusing particularly on the inner coating.

The optical device case according to Patent Literature 1 has a resistive heating element 301 (metal thin film or transparent conductive film) on the inside of the light-transmitting member (cover body) 201. A moth-eye film 303 is fixed to the resistive heating element 301 via an adhesive layer 302. The moth-eye film 303 serves to prevent condensation and reflection.

### SUMMARY OF THE INVENTION

When a heating layer is provided in an inner coating, there is a problem that the number of layers of the coating increases and the transmittance decreases.

To solve the above problem, a cover according to the disclosed technology is an optical device cover that transmits light emitted by a light source to the outside, and includes a cover substrate, a metal fine wire placed on a light source side of the cover substrate, and an antireflection layer that embeds and covers the metal fine wire. In other words, the disclosed technology achieves a heating function and an antireflection function in a single layer, reducing the number of layers in the inner coating.

According to the disclosed technology, the reduction in the number of layers reduces interface reflection and improves transmittance. Moreover, since the reduction in the number of layers also reduces the production process, an inexpensive optical device cover can be implemented.

### BRIEF DESCRIPTION OF THE DRAWINGS

FIG. 1 is a diagram for describing an example of applying LiDAR to inter-vehicle distance measurement;
FIG. 2 is a partially enlarged view of an optical device cover;
FIG. 3 is a diagram for describing an optical device case according to a conventional technology;
FIG. 4 is a diagram for describing the configuration of an inner coating according to the disclosed technology;
FIG. 5 is a diagram for describing a moth-eye structure;
FIG. 6A is a diagram for describing an example of a formation procedure of an overcoat antireflection film. A state before application of a moth-eye ink is shown;
FIG. 6B is a diagram illustrating the procedure of pressing a moth-eye shape transfer mold against the moth-eye ink in the formation procedure of the overcoat antireflection film;
FIG. 6C is a diagram illustrating the procedure of irradiating the moth-eye ink with UV light in the formation procedure of the overcoat antireflection film; and
FIG. 6D is a diagram illustrating the procedure of removing the moth-eye shape transfer mold in the formation procedure of the overcoat antireflection film.

### DETAILED DESCRIPTION OF THE EMBODIMENTS

Hereinafter, embodiments of the disclosed technology will be described in detail. Note that components with the same function are assigned the same number, and redundant explanations are omitted.

### FIRST EMBODIMENT

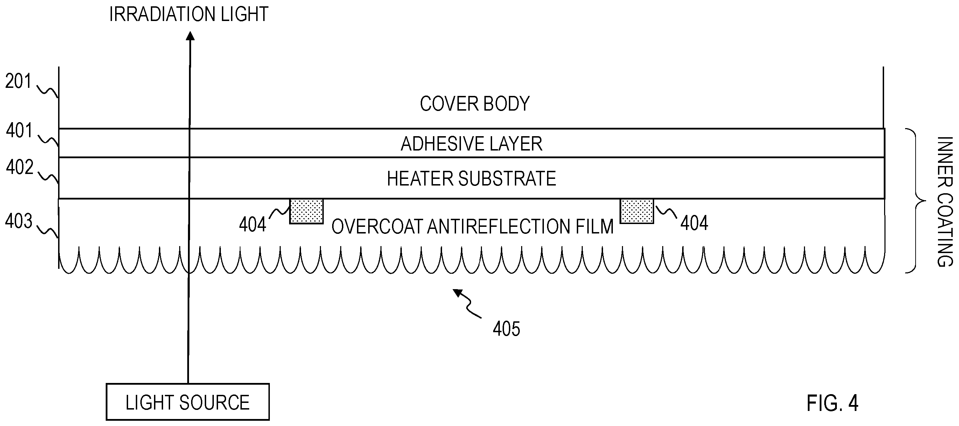

In the disclosed technology, a heating function and an antireflection function are achieved by a single layer to reduce the number of layers in an inner coating. FIG. 4 illustrates the configuration of the inner coating according to the disclosed technology.

A heater substrate 402 is bonded to a cover body 201 via an adhesive layer 401. Metal fine wires 404 (e.g., silver fine wires) are placed on the heater substrate 402. The Joule heat generated by the metal fine wires 404 is diffused by the heater substrate 402 and transmitted to the cover body 201.

The metal fine wires 404 are coated with an overcoat antireflection film 403. For antireflection, a moth-eye structure is provided on the light source side of the overcoat antireflection film 403.

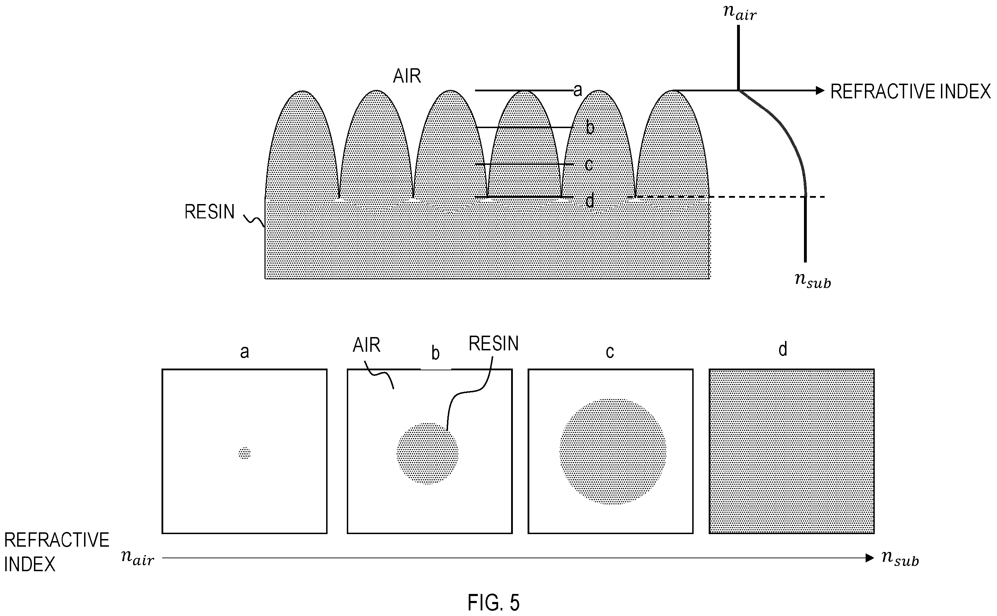

FIG. 5 is a description of the moth-eye structure cited from Reference Literature 1. The moth-eye structure consists of bell-shaped protrusions arranged in a regular pattern, with the outermost surface (a) being almost an air layer, and the cross-sectional area of the protrusions increasing downward. Thanks to this bell shape, the refractive index changes gradually, and thus light passing through the protrusions is not significantly reflected.

To achieve similar low reflection, the protrusions do not necessarily have to be bell-shaped; any structure where the cross-sectional area of the protrusions increases downward will suffice. Such a structure will be referred to as a moth-eye structure in the present specification.

Reference Literature 1: Uozu, "Development of the Moth-eye Type Super Anti-reflection Film," Journal of Intellectual Property Association of Japan, Vol. 13, No. 2, pp. 43-49, 2016.

### <Requirements for overcoat function>

The overcoat antireflection film 403 is required to have high insulation, high moisture resistance, and low moisture absorption. This is because metal fine wires deteriorate when they come into contact with moisture due to oxidation and other factors. In addition, this is because metal migration, where the metals ionize, move and precipitate, causes insulation failure.

Therefore, regarding the moisture resistance after film hardening, the water absorption rate, which is defined by the weight reduction rate measured by thermogravimetric analysis after immersing the hardened moth-eye ink (described later) in water for 24 hours and heating at 50°C for 60 minutes, is desirably 2% or less, and more desirably 0.7% or less. Moreover, the volume resistivity is preferably 10¹²Ω·cm or more, and more preferably 10¹⁷Ω·cm or more. Note, however, that if the volume resistivity of resin is high during moth-eye molding, the adhesion of foreign substances due to electrification during mold release becomes an issue. As a countermeasure, it is preferable to apply an antistatic treatment to the mold surface or to add an antistatic layer to the outermost layer of the moth-eye structure.

### <Requirements for antireflection function>

In the processing of moth-eye for near-infrared, it is necessary to increase the aspect ratio of the height/width of the uneven shape to improve low reflection performance. The pitch and height of the moth-eye structure are preferably 200 nm or more from the perspective of effective structural size for low reflection of near-infrared, and preferably 1000 nm or less from the perspective of moldability of the structure. From the above, a pitch of about 200 nm to 1000 nm and a height of about 200 nm to 1000 nm are desirable, and to reduce the reflectance at wide angles, a pitch of about 400 nm to 1000 nm and a height of about 700 nm to 1000 nm are even more desirable. This achieves antireflection for near-infrared wavelengths from 800 nm to 1600 nm, or for certain parts of that wavelength range. In particular, for LiDAR applications, antireflection must be achieved only for certain wavelength ranges such as 910 nm ±30 nm or 1550 nm ±10 nm. Note that the pitch of the moth-eye structure refers to the average spacing between the peaks of the protrusions.

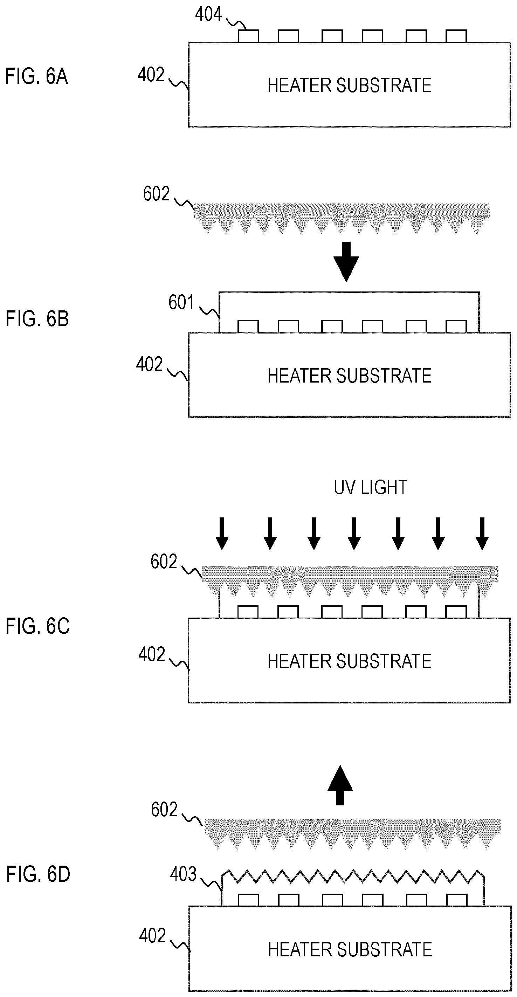

FIG. 6 illustrates an example of the formation procedure for the overcoat antireflection film 403.

A heater substrate 402 with a printed metal mesh pattern (metal fine wires 404) is prepared (FIG. 6A).

Moth-eye ink 601 is applied on the heater substrate 402 and a moth-eye shape transfer mold 602 is pressed onto the moth-eye ink 601 (FIG. 6B). Note that moth-eye ink is a mixed material of light-curable resin before light irradiation.

The moth-eye ink is irradiated with UV light to cure it while the moth-eye shape is maintained. If the moth-eye shape transfer mold 602 is, for example, a quartz mold that transmits UV light, UV irradiation is performed from the mold side (FIG. 6C). If the moth-eye shape transfer mold is, for example, a nickel mold or a silicon mold that does not transmit UV light, UV irradiation is performed from the heater substrate side.

After curing the moth-eye ink, the moth-eye shape transfer mold 602 is removed, and the overcoat antireflection film 403 is completed (FIG. 6D). Considering the release properties of the mold and the overcoat antireflection film, as well as the durability of the moth-eye structure during release, it is desirable for the indentation elastic modulus measured by the ultra-micro hardness testing system (Fischer, FischerScope HM2000) after curing to be between 5 Pa and 2000 MPa, and even more desirable if it is between 500 Pa and 2000 MPa.

The overcoat antireflection film 403 needs to have the above requirements. The inventors have found the optimal composition of mixed materials for the formation of the overcoat antireflection film 403 as a result of diligent research. The composition is as follows.

### <First composition>

**[Table 1]**

| | Material | Effect |
|---|---|---|
| Main component 1 | Imide skeleton oligomer | Imparts low moisture absorption and insulation. |
| Main component 2 | Acrylic oligomer | Imparts flexibility to the cured film. |
| Monofunctional monomer | IBXA | Imparts high hardness and low moisture absorption. |
| Multifunctional monomer | TMP-A | Imparts high hardness (crosslinking ability). Note, however, that the number of functional groups was selected to fit within the desired elastic modulus range. |
| Solvent | PGME | Adjusts the ink viscosity and optimizes the transferability of the fine structure. |
| Photopolymerization initiator | Irg184 | Imparts ultraviolet curing properties. |

### <Second composition>

**[Table 2]**

| | Material | Effect |
|---|---|---|
| Main component 1 | Imide skeleton oligomer | Imparts low moisture absorption and insulation. |
| Monofunctional monomer | LA | Imparts flexibility (aliphatic) and low moisture absorption (aliphatic). |
| Multifunctional monomer | DPHA | Imparts high hardness (crosslinking ability). Considering the balance of flexibility with the monofunctional monomer, a highly crosslinkable one was selected. |
| Filler | Silica | Imparts high hardness and low refractive index properties. Improves the strength of the moth-eye structure. |
| Solvent | PGME | Adjusts the ink viscosity and optimizes the transferability of the fine structure. |
| Photopolymerization initiator | Irg819 | Imparts ultraviolet curing properties. |

### <Third composition>

**[Table 3]**

| | Material | Effect |
|---|---|---|
| Main component 1 | Imide skeleton oligomer | Imparts low moisture absorption and insulation. |
| Monofunctional monomer | ISTA | Imparts flexibility (aliphatic) and low moisture absorption (aliphatic). |
| Multifunctional monomer | TMP-A | Imparts high hardness (crosslinking ability). To achieve the desired elastic modulus, low cross-linking TMP-A was selected. |
| Solvent | MEK | Adjusts the ink viscosity and optimizes the transferability of the fine structure. |
| Photopolymerization initiator | Irg184 | Imparts ultraviolet curing properties. |

The above is the description of the first embodiment.

Note that as specific examples of monofunctional monomers, IBXA, LA, and ISTA were mentioned, but to describe the requirements of monofunctional monomers from the molecular structure, acrylic or methacrylic monomers which have a straight, branched, or alicyclic side chain with eight or more carbon atoms are effective for preventing oxidation of metal fine wires.

Also, TMP-A and DHPA were mentioned as multifunctional monomers, but to describe the requirements of multifunctional monomers from the nature of the molecules, acrylic or methacrylic monomers having three or more radical reactive groups are effective for improving the strength of the moth-eye structure.

## Claims

1. An optical device cover that transmits light emitted by a light source to the outside, comprising:
a cover substrate;
a metal fine wire placed on a light source side of the cover substrate; and
an antireflection layer that embeds and covers the metal fine wire.

2. The optical device cover according to claim 1, wherein
the antireflection layer has a moth-eye structure facing the light source, and
the moth-eye structure reduces reflection and transmits light in a wavelength range of 800 nm to 1600 nm, or part of the light in that wavelength range.

3. The optical device cover according to claim 2, wherein
the moth-eye structure has a protrusion structure with a pitch of 200 nm to 1000 nm and a height of 200 nm to 1000 nm.

4. The optical device cover according to claim 1, wherein
the antireflection layer is made by curing a light-curable resin, and has moisture resistance with 2% or less water absorption rate defined by a weight reduction rate when the cured light-curable resin is immersed in water for 24 hours and then heated at 50°C for 60 minutes, insulation with a volume resistivity of 10¹²Ω·cm or more, and a hardness with an elastic modulus of 5 Pa to 2000 MPa.

5. The optical device cover according to claim 1, wherein
the antireflection layer mainly consists of an imide skeleton oligomer.

6. The optical device cover according to claim 1, wherein
the antireflection layer is made by curing a light-curable resin, and the light-curable resin contains acrylic monomers or methacrylic monomers which have a straight, branched or alicyclic side chain with eight or more carbon atoms.

7. The optical device cover according to claim 1, wherein
the antireflection layer is made by curing a light-curable resin, and the light-curable resin contains multifunctional acrylic or methacrylic monomers with three or more radical reactive groups.

8. The optical device cover according to claim 2, wherein
the moth-eye structure of the antireflection layer has improved strength by fillers.

9. The optical device cover according to claim 2, wherein
a refractive index of the antireflection layer is controlled by fillers.

10. The optical device cover according to claim 2, wherein
the antireflection layer is formed by curing a photopolymerization compound using a photopolymerization initiator.

11. An optical member comprising:
a substrate on which a metal fine wire is placed, and
an antireflection layer that embeds and covers the metal fine wire,
wherein
the antireflection layer is made by curing a light-curable resin, and has moisture resistance with 2% or less water absorption rate defined by a weight reduction rate when the cured light-curable resin is immersed in water for 24 hours and then heated at 50°C for 60 minutes.
